# EUROPÄISCHE PATENTSCHRIFT

(11) **EP 2 922 133 B1**
(45) Veröffentlichungstag und Bekanntmachung des Hinweises auf die Patenterteilung: **09.11.2016**
(21) Anmeldenummer: 14197183.8
(22) Anmeldetag: 10.12.2014
(51) Int. Cl.: F42B 39/16, H01M 10/00, H01M 6/00, C03C 11/00

(54) **Vorrichtung und Verfahren zum Transport von galvanischen Zellen**
Device and method for the transport of galvanic cells
Dispositif et procédé destinés au transport de cellules galvaniques

(30) Priorität: 21.03.2014 DE 102014103928
(43) Veröffentlichungstag der Anmeldung: 23.09.2015
(73) Patentinhaber: Genius Patentverwertung GmbH & Co. KG, 15711 Königs Wusterhausen (DE)
(72) Erfinder: Pasewald, Klaus-Michael, 15827 Blankenfelde (DE)
(74) Vertreter: Moser Götze & Partner Patentanwälte mbB

(56) Entgegenhaltungen:
- EP-A1- 0 395 322
- DE-A1- 4 438 486
- DE-A1-102006 019 739
- DE-A1-102008 006 778
- DE-A1-102010 048 051
- DE-U1-202012 002 104
- DE-U1-202013 004 963

## Beschreibung

Die Erfindung betrifft eine Vorrichtung zum Transport von verbrauchten, beschädigten oder defekten galvanischen Zellen unter Verhinderung und Bekämpfung von sicherheitskritischen Zuständen der galvanischen Zellen, insbesondere Lithiumionen-basierten Zellen und/oder Lithiumionen-Polymerzellen, mit einem Behälter, der einen Raum zwischen sich definieren, wobei der Raum mit einem Brandschutzmittel aus lediglich inertem, nicht-leitfähigem und nicht brennbarem sowie saugfähigem Hohlglasgranulat als lose Schüttung verfüllt ist. Des Weiteren betrifft die Erfindung ein Lager- und Transport-Verfahren für verbrauchte, beschädigte oder defekte galvanischen Zellen.

Vorliegend werden im Rahmen der Erfindung als galvanische Zelle Vorrichtungen zur spontanen Umwandlung von chemischer in elektrische Energie verstanden, die in drei Gruppen unterteilt werden,
a) Primärzellen, umgangssprachlich auch als Batterie bezeichnet. Kennzeichnend ist, dass die Zelle aufgeladen ist und nur einmalig entladen werden kann. Die Entladung ist irreversibel und die Primärzelle kann elektrisch nicht mehr aufgeladen werden.
b) Sekundärzellen, umgangssprachlich auch als Akkumulator bezeichnet. Nach einer Entladung können Sekundärzellen durch eine gegenüber der Entladung gegenläufigen Stromrichtung wieder neu aufgeladen werden. Es kommen im Rahmen der Erfindung insbesondere Lithiumionen-basierte Zellen in Frage.
c) Brennstoffzellen, auch als Tertiärzellen bezeichnet. Bei diesen galvanischen Zellen wird der chemische Energieträger von außerhalb kontinuierlich zur Verfügung gestellt. Dies ermöglicht einen kontinuierlichen und im Prinzip zeitlich unbeschränkten Betrieb.

Die Erfindung ist prinzipiell auf alle drei Arten von galvanischen Zellen anwendbar, jedoch insbesondere auf die Metall-lonen-basierten Zellen und ganz besonders auf die Lithiumionen-basierten Zellen und/oder Lithiumionen-Polymerzellen gerichtet.

Im Folgenden wird vereinfachend nur der Begriff "Batterie" verwendet, auch wenn alle Arten von galvanischen Zellen gemeint sind.

Lithiumionen-basierte Zellen werden heutzutage vermehrt in vielfältigen Bereichen eingesetzt, da ihre Kapazität im Vergleich zum Gewicht vorteilhaft ist. Insbesondere wird erwartet, dass ihre Verwendung in Elektrofahrzeugen und Hybridfahrzeugen, wie Akkumulator betriebene PKW oder Zweiräder in Zukunft stark zunimmt.

Beim Versagen von Batterien, insbesondere von Lithiumionen Batterien, können aus dem Batterieinneren chemische Stoffe (Elektrolyt) und Partikel austreten. Dieses freigesetzte Material liegt dann in fester, flüssiger oder gasförmiger Form sowie in Kombinationen vor, z.B. als Partikel, Staub, Folie, Aerosol, Flüssigkeit, Tröpfchennebel. Zudem kann durch chemische und/oder elektrische Reaktion starke Hitze auftreten.

Dieses Material ist teilweise sehr reaktiv und gesundheitsschädlich. Es ist auch möglich, dass sich das freigesetzte Material entzündet und es zu Brand- und/oder Explosionsereignissen kommt.

So wird beispielsweise in fast allen Lithiumionen-Batterien Lithiumhexafluorophosphat als Elektrolyt verwendet, welches bei einer Beschädigung der Batterie austreten und sich zu hochreaktiven und toxischen Verbindungen (Flusssäure etc.) zersetzen kann.

Kommt es trotz aller Vorsichtsmaßnahmen zu einem sicherheitskritischen Zustand, so müssen Gegenmaßnahmen eingeleitet werden. Kommt es z.B. zu einem Brand, so sind Maßnahmen zur Brandbekämpfung und zur Vermeidung einer Kontamination der Umgebung erforderlich.

Sicherheitskritische Zustände umfassen vorliegend:
- das Austreten des Elektrolyt mit ggf. zeitlich verzögerter Bildung von aggressiven und giftigen Verbindungen (bei Lithium-Zellen ist das z.B. Flusssäure);
- die Erwärmung der Zelle über den Siedepunkt des Elektrolyt hinaus;
- die Gasbildung;
- das Öffnen eines Sicherheitsventils und/ oder das Platzen des Gehäuses
- das Austreten des Gases;
- die Bildung eines zündfähigen Gasgemisches unter Zustrom von Sauerstoff;
- die Explosion des Gasgemisches nach Entzündung an einer zelleninternen oder
- externen Zündquelle;
- das Verbrennen der Bestandteile der galvanischen Zelle unter Bildung von Rauchgasen;
- das Übergreifen des Brandes auf umliegende Materialien und Einrichtungen.

Diese sicherheitskritischen Zustände bei galvanischen Zellen, insbesondere Metall-Ionen-basierten Zellen und ganz besonders bevorzugt Lithiumionen-basierten Zellen sollten verhindert oder zumindest weitgehend unterbunden werden.

Aus der DE 10 2006 019 739 B4 ist ein System zum Löschen von Bränden in einem Gefahrenobjekt unter Verwendung eines Löschmittels mit mindestens einem Vorratsbehälter für das Löschmittel, mit einem Rohrleitungssystem zum Transport des Löschmittels vom Vorratsbehälter zum Brand und mit einem Fördermittel zum Fördern des Löschmittels vom Vorratsbehälter durch das Rohrleitungssystem zum Brand bekannt. Als Löschmittel kommt ein bis wenigstens 1000 Grad temperaturfestes, hohles Rundgranulat zum Einsatz, dessen Durchmesser zwischen 0,1 mm und 5 mm liegt. Dieses System hat sich bereits bewährt, benötigt aber aktive Fördermittel, Sensoren etc. und kommt somit eher für Industrieanlagen in Frage.

Aus der EP 2 167 439 B1 ist eine Verwendung eines Brandschutzmittels bestehend aus einem bis wenigstens 1000°C temperaturfesten hohlen Rundgranulat aus Hohlglaskugeln, wobei der Durchmesser des Rundgranulats zwischen 0,1 mm und 5 mm liegt, zum vorbeugenden Brandschutz durch dauerhaftes Aufbringen auf das Gefahrenobjekt und/oder dauerhaftes Verfüllen des Gefahrenobjekts mit dem Brandschutzmittel bekannt. Auch diese Idee hat sich bewährt, eignet sich aber insbesondere für die schwimmende Aufbringung in Tanklagern oder Verfüllen von Kabelkanälen etc.

Aus der WO 2011/015411 A1 ist ein Verfahren zur Bekämpfung und/oder Vorbeugung eines Brandes einer oder mehrerer Batteriezellen, bevorzugt von Lithiumionen-Zellen bekannt, bei dem eine wässrige Lösung eines Kalzium-Salzes und ein Gel-Löschmittel angewendet werden.

Aus der WO 2010/149611 A1 ist ein Verfahren zur sicheren Zerkleinerung von Batterien bekannt, umfassend die Schritte: a) Bereitstellen einer oder mehrerer zu zerkleinernder Batterien; und b) mechanische Zerkleinerung der bereitgestellten Batterien, wobei der Zerkleinerungsprozess stattfindet in Anwesenheit von: i) mindestens einem Metallbrandschutzmittel, welches geeignet ist einen Brand der Batterien zu unterdrücken oder zu vermindern; und von ii) mindestens einem Bindemittel, welches geeignet ist Säuren und/oder Basen zu binden.

Aus der DE 10 2010 035 959 A1 ist eine Transportvorrichtung für Gefahrgut, insbesondere elektrochemische Energiespeichereinrichtungen bekannt, die eine Sicherheitseinrichtung und ein Behältnis für das Gefahrgut aufweisen kann, das mit einem Füllmaterial gefüllt ist.

Aufgabe der Erfindung ist es demgegenüber eine Alternative zum Transport und Lagerung von verbrauchten, beschädigten oder defekten galvanischen Zellen unter Verhinderung und Bekämpfung von sicherheitskritischen Zuständen der galvanischen Zellen bereitzustellen, die die Handhabung erleichtert.

Diese Aufgabe wird durch die in Anspruch 1 wiedergegebene Vorrichtung sowie das in Anspruch 9 wiedergegebene Verfahren gelöst.

Erfindungsgemäß ist erkannt worden, dass wenn in dem Raum ein für das Brandschutzmaterial durchlässiger Korb zur Aufnahme für mindestens eine galvanische Zelle angeordnet ist, das Einbringen und insbesondere das Herausheben der Batterien in bzw. aus dem Brandschutzmaterial vereinfacht wird.

Es wird nämlich so möglich, den Korb außerhalb des Behälters aus mit den fraglichen Batterien zu bestücken und den Korb dass als Ganzes im mit Brandschutzmaterial gefüllten Behälter zu versenken. Analog ist es einfach den Behälter zu entleeren, wozu nur der Korb herausgehoben werden muss. Das Brandschutzmaterial dringt in beiden Fällen aufgrund der Durchlässigkeit in den Korb ein (bzw. fließt heraus) und umgibt die Batterien, so dass diese eingebettet sind (bzw. frei liegen).

Vorzugsweise ist der Korb ein Drahtkorb, der ggf. aus pulverbeschichtetem Draht besteht.

Vorzugsweise besteht der Korb aus einem nicht leitfähigen Material.

Damit die Abstände zu den Behälterwandungen eingehalten werden, kann der Korb mit Abstandhaltern versehen sein. Somit muss der Korb nur in den mit Brandschutzmaterial gefüllten Behälter eingebracht werden. Die Abstände werden somit "automatisch" eingehalten und auch im Transport trotz Erschütterungen und Ruckeln.

Ferner kann der Korb mit Unterteilungen im Inneren versehen sein, um Fächer für einzelne Batterien auszubilden, so dass diese den geforderten Abstand zueinander immer einhalten.

Die Abstandhalter können dabei im einfachsten Fall von einer Bügelkonstruktion gebildet sein, die z.B. als Teil des Korbs ausgebildet ist und nach Außen absteht.

Die Abstandhalter können am Boden und/oder an den Seitenwänden des Korbs angeordnet sein, so dass die Abstände zum Boden und/oder den Seitenwänden eingehalten werden und diese mit Brandschutzmaterial ausgefüllt sind.

Die Maschenweite bzw. Größe der Öffnungen kann an die Größe des Brandschutzmittels angepasst werden.

Der Korb kann mit Halterungen versehen sein, um die manuelle oder maschinelle Handhabung, z.B. Herausziehen, zu vereinfachen, versehen sein. Dies können z.B. Bügelgriffe, Ösen etc. sein.

Das bevorzugte Brandschutzmittel besteht lediglich aus Hohlglasgranulat, d.h. es enthält nur Hohlglasgranulat und sonst keine weiteren Bestandteile. Vorzugsweise ist das Hohlglasgranulat ein bis wenigstens 1000°C temperaturfestes hohles oder mit Hohlstellen versehenes Rundgranulat, das vorzugsweise einen mittleren Durchmesser zwischen 0,1 mm und 10 mm aufweist. Noch bevorzugter ist ein mittlerer Durchmesser zwischen 0,1 mm und 5 mm.

Das verwendete Hohlglasgranulat hat eine entsprechend des Sicherheitsrisikos berechnete Korngröße und Hohlraumanteil zur Entzündungsvermeidung durch Abkühlung und zum Löschen eines Brandes durch Erstickung und /oder Sauerstoffabschluss und zur Verhinderung der Bildung eines entzündlichen Gasgemisches sowie einer entsprechend des Sicherheitsrisikos berechneten Korngröße zur Verhinderung einer Explosion, also einer explosionsfähigen Atmosphäre, Verdrängen von Sauerstoff und verhindern von Zündquellen. Ferner weist es keinerlei elektrische Leitfähigkeit auf. Zudem ist es saugfähig und kann daher aus den Zellen ausgetretenen Elektrolyten aufnehmen.

Das System erlaubt die Wiederverwendung des ohne Probleme und es ist praktisch verschleißfrei. Das Brandschutzmaterial muss nur bei Verbrauch oder Kontamination ausgetauscht werden.

Die Erfindung betrifft auch ein Lager- und Transportverfahren nach Anspruch 9.

Danach werden die fraglichen galvanischen Zellen direkt und einzig in ein als Brandschutzmittel dienendes Hohlglasgranulat zur Lagerung /Transport zur Verhinderung von sicherheitskritischen Zuständen in der zuvor beschriebenen Vorrichtung eingebettet.
Es bedarf keiner aktiven Überwachung zur Auslösung des Ausbringens und/oder Aufbringen eines Löschmittels.

Die Lagerung und/oder der Transport können in einem Gefahrgutbehälter entsprechender Klassifikation durchgeführt, in dem die galvanischen Zellen zueinander in der Höhe und Breite sowie Tiefe mit Abstand eingebettet sind.

Es hat sich gezeigt, dass sich das besondere Brandschutzmittel der Hohlglasgranulate für das Lagern und Transportieren von verbrauchten, beschädigten oder defekten Batterien bzw. galvanischen Zellen, insbesondere Lithiumionen-basierten Zellen, eignet.

Die Eigenschaften der eingesetzten Hohlglasgranulate sind oben angegeben und werden auch bei der Einbettung verwendet. Das Brandschutzmittel wirkt durch "Ersticken" des potentiellen Brandes, da das Rundgranulat sich nach der dichtesten Kugelpackung ab einer gewissen Schichtdicke Luft verdrängend und abdichtend auf die galvanischen Zellen ablegt.

Das Rundgranulat besteht aus einem inerten Glas-Material. Dies erlaubt eine besonders gute Schütt- und Riesel- sowie Kriechfähigkeit und somit gute Transporteigenschaften und Abdeckung des Brandbereichs, auch in engen und ansonsten schlecht zugänglichen Bereichen, wie Spalten. Somit wird auch dort eine Sauerstoffversorgung des potentiellen Brandes verhindert.

Vorzugsweise finden die Lagerung und/oder der Transport in einem Behälter (äußere Umwandung) aus brandfestem Material, z.B. einem Gefahrgut- oder Sicherheitsbehälter statt, in dem die Batterien im Hohlglasgranulat eingebettet und ggf. zueinander in der Höhe und Breite sowie Tiefe mit Abstand eingebettet sind. Als besonders bevorzugt hat sich herausgestellt, einen Abstand von mindestens jeweils ca. 30 mm (Höhe, Breite, Tiefe) bezogen auf eine Zellenhöhe von ca. 10 mm zueinander einzuhalten, falls mehrere Lithiumionen-basierte Zellen eingelegt werden.

Dabei sollte zwischen Seitenwänden der Außenverpackung (=Umwandung) und den Lithiumionen-Zellen ein Abstand eingehalten werden von mindestens 2 cm, vorzugsweise 5 bis 20 cm, insbesondere 10 cm.

Die Außenverpackung kann z.B. aus Metall geeigneter Größe bestehen, deren Boden mit einer Schicht eines speziellen Hohlglasgranulates mit einer Schichtdicke von mindestens 30 mm, vorzugsweise 5 bis 20 cm, insbesondere 10 cm bedeckt ist. Es eignen sich aber auch Behälter aus Kunststoff.

Sollen mehrere galvanische Zellen transportiert werden, so sollten die galvanischen Zellen so auf diesen Boden gelegt werden, dass zwischen den galvanischen Zellen ein freier Raum von mindestens 100 mm verbleibt. Die freien Räume sind mit demselben speziellen Hohlglasgranulat aufzufüllen. Auf diese erste Lage von galvanischen Zellen können weitere Lagen von Zellen in gleicher Weise gelegt werden. Die Zellen sind nach oben mit einer Schicht des speziellen Hohlglasgranulates mit einer Schichtdicke von mindestens 100 mm abzudecken. Somit sind alle galvanischen Zellen allseitig von einer Schicht des speziellen Hohlglasgranulates mit einer Schichtdicke von mindestens 100 mm umgeben.

Der geschlossene (Sicherheits)behälter verhindert im Fall der Entzündung der Zellen die Brandausbreitung und Kontamination. Das Hohlglasgranulat erstickt einen aufgetretenen Brand innerhalb kurzer Zeit bzw. lässt diesen gar nicht erst entstehen. Die Zellen werden dabei direkt in eine entsprechend des Sicherheitsrisikos berechnete Menge des Hohlglasgranulats eingebettet.

Weitere Merkmale und Einzelheiten der Erfindung ergeben sich aus der nachfolgenden Beschreibung der Zeichnung. Es zeigen:
Fig. 1 eine schematische seitliche Schnittansicht eines erfindungsgemäßen Behälters zum Sammeln, Lagern und Transport von Lithiumionen-Batterien und
Fig. 2 den Behälter aus Figur 1 in einer Draufsicht im Schnitt entlang der Linie A-A.

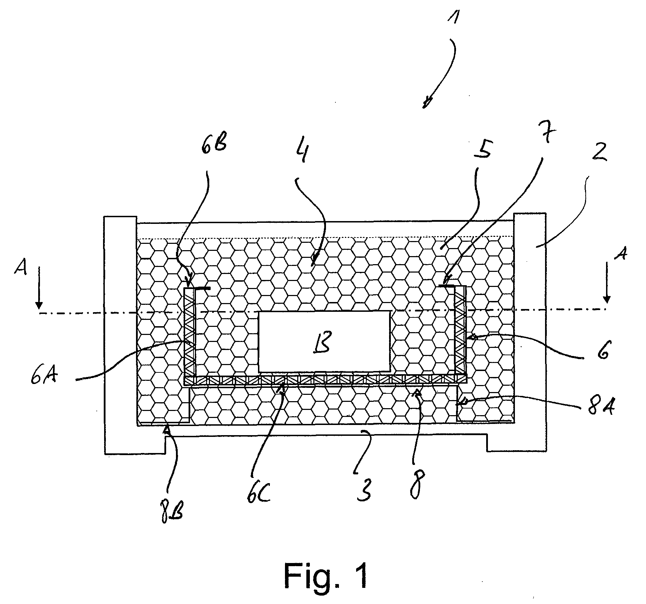

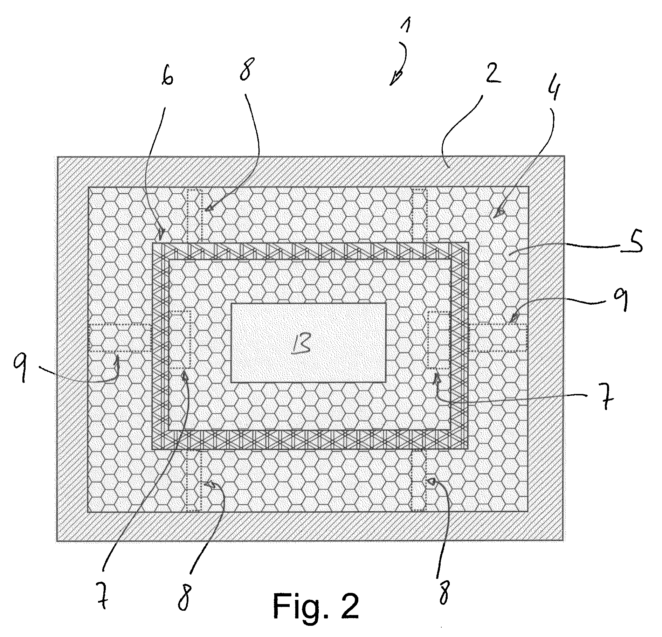

In den Figuren 1 und 2 ist ein als Ganzes mit 1 bezeichneter verschließbarer Behälter aus brandfestem Material dargestellt. In den Figuren 1 und 2 ist der vorhandene Deckel zur besseren Übersicht weggelassen.

Der Behälter 1 definiert mit einer äußeren Wandung 2 und einem Boden 3 (sowie dem nicht dargestellten Deckel) im Inneren einen Raum 4, der mit einer Schüttung Hohlglasgranulat 5 gefüllt ist.

Das Hohlglasgranulat 5 ist inert, nicht-leitfähig und nicht brennbar sowie saugfähig und schmilzt erst oberhalb von mindestens 1000 °C. Es weist einen mittleren Durchmesser zwischen 0,1 und 5 mm (nach Siebanalyse) auf.

In den Raum 4 ist ein Korb 6 aus pulverbeschichtetem Drahtgeflecht eingesetzt, dessen Maschenweite derart ausgestaltet ist, dass das Hohlglasgranulat 5 ungehindert durch die Maschen dringen bzw. fließen kann.

In dem Korb 6 ist eine defekte Batterie B eingelegt.

Da das Hohlglasgranulat 5 frei durch die Maschen des Korbs fließen kann, wird die Batterie B allseitig von Hohlglasgranulat 5 umgeben bzw. darin eingebettet und die Gefahr eines unkontrollierten Auftretens eines kritischen Zustands ist minimiert bzw. verhindert.

Damit der Korb 6 in den Behälter 1 eingebracht und entfernt werden kann, weist er jeweils zwei Bügelgriffe 7 auf, vom oberen Rand 6B des Korbs 6 nach Innen vorstehen.

Ferner ist der Korb an der Unterseite mit zwei Abstandshaltern 8 versehen, die jeweils aus einem Drahtbügel bestehen und in Längsrichtung des Korbs beabstandet sind.

Die Bügel 8 erstrecken sich zunächst mit einem Schenkel 8A vom Korbboden 6C nach unten zum Boden 3 des Behälters und bestimmen somit den Abstand des Korbs 6 bzw. der darin angeordneten Batterie B zum Boden.

Dann erstrecken sich die Bügel 8 seitlich nach Außen zur seitlichen Wandung 6A des Behälters 1, wozu ein weiterer Schenkel 8B abknickt. Somit wird der Korb 6 auch seitlich in dem Behälter 1 positioniert und kann nicht verrutschen, so dass der Abstand zur seitlichen Wandung 6A ebenfalls festgelegt ist.

Der Abstand des Korbs 6 in der verbleibenden Behälterdimension (Blickrichtung auf die Figur 1) wird entweder durch den Korb 6 selber oder weitere Bügel 9 (siehe Figur 2, gestrichelt dargestellt) analog fixiert.

Die Batterie B kann also in den Korb 6 gelegt werden und dieser anschließend in den Behälter 1 eingebracht werden, wobei bereits teilweise eingefülltes Hohlglasgranulat 5 durch die Maschen des Korbs fließt und somit die Batterie B umgibt. Danach kann weiteres Hohlglasgranulat 5 aufgefüllt werden um den Raum 4 im Behälter 1 vollständig bzw. bis zur gewünschten Füllhöhe auszufüllen und die Batterie B zu bedecken.

### Bezugszeichenliste

- 1: Gefahrgutbehälter
- 2: Wandung
- 3: Boden
- 4: Raum
- 5: Hohlglasgranulat
- 6: Korb
- 6A: seitliche Wandung des Korbs
- 6B: Rand des Korbs
- 6C: Korbboden
- 7: Bügelgriff
- 8: Bügel
- 8A: Schenkel
- 8B: Schenkel
- 9: Bügel

- B: Lithiumionenpolymer-Batteriemodul

## Patentansprüche

1. Vorrichtung zum Transport von verbrauchten, beschädigten oder defekten galvanischen Zellen unter Verhinderung und Bekämpfung von sicherheitskritischen Zuständen der galvanischen Zellen, insbesondere Lithiumionen-basierten Zellen und/oder Lithiumionen-Polymerzellen, mit einem Behälter, der einen Raum definiert, wobei der Raum mit einem Brandschutzmittel aus lediglich inertem, nicht-leitfähigem und nicht brennbarem sowie saugfähigem Hohlglasgranulat als lose Schüttung verfüllt ist, **dadurch gekennzeichnet dass** in dem Raum ein für das Brandschutzmaterial durchlässiger Korb zur Aufnahme für mindestens eine galvanische Zelle angeordnet ist und das saugfähige Hohlglasgranulat einen mittleren Durchmesser zwischen 0,1 mm und 10 mm aufweist., wobei der Korb ein Drahtkorb ist und der Korb mit Abstandhaltern versehen ist.

2. Vorrichtung nach Anspruch 1, **dadurch gekennzeichnet, dass** der Korb aus pulverbeschichtetem Draht besteht.

3. Vorrichtung nach Anspruch 2, **dadurch gekennzeichnet, dass** die Abstandhalter von einer Bügelkonstruktion gebildet sind.

4. Vorrichtung nach Anspruch 3, **dadurch gekennzeichnet, dass** die Abstandhalter am Boden und/oder an den Seitenwänden des Korbs angeordnet sind.

5. Vorrichtung nach einem der vorhergehenden Ansprüche, **dadurch gekennzeichnet, dass** das Hohlglasgranulat ein bis wenigstens 1000°C temperaturfestes hohles oder mit Hohlstellen versehenes Rundgranulat ist, das vorzugsweise einen mittleren Durchmesser zwischen 0,1 mm und 5 mm aufweist.

6. Vorrichtung nach einem der vorhergehenden Ansprüche, **dadurch gekennzeichnet, dass** die äußere Umwandung ein üblicher Gefahrgutbehälter ist.

7. Lager- und Transport-Verfahren für verbrauchte, beschädigte oder defekte galvanischen Zellen, insbesondere Lithiumionen-basierten Zellen, **dadurch gekennzeichnet, dass** die galvanischen Zellen direkt und einzig in ein als Brandschutzmittel dienendes Hohlglasgranulat zur Lagerung /Transport zur Verhinderung von sicherheitskritischen Zuständen in einer Vorrichtung nach einem der vorhergehenden Ansprüche eingebettet werden.

8. Verfahren nach Anspruch 7, **dadurch gekennzeichnet, dass** die Lagerung und/oder der Transport in einem Gefahrgutbehälter entsprechender Klassifikation durchgeführt werden, in dem die galvanischen Zellen zueinander in der Höhe und Breite sowie Tiefe mit Abstand eingebettet sind.

## Claims

1. Apparatus for transporting used, damaged or defective galvanic cells whilst preventing and controlling safety critical conditions of the galvanic cells, particularly lithium ion-based cells and/or lithium ion polymer cells, with a container, which defines a space, wherein the space is filled with a flame retardant of only inert, nonconductive and non-combustible and absorbent hollow glass granulate in the form of a loose filling, **characterised in that** arranged in the space there is a basket, which is permeable for the flame retardant for receiving at least one galvanic cell and the absorbent hollow glass granulate has a mean diameter between 0.1 mm and 10 mm, wherein the basket is a wire basket and the basket is provided with spacers.

2. Apparatus as claimed in Claim 1, **characterised in that** the basket consists of powder coated wire.

3. Apparatus as claimed in Claim 2, **characterised in that** the spacers are constituted by a bracket construction.

4. Apparatus as claimed in Claim 3, **characterised in that** the spacers are arranged on the base and/or on the side walls of the basket.

5. Apparatus as claimed in one of the preceding claims, **characterised in that** the hollow glass granulate is a hollow round granulate or a round granulate provided with hollow regions, which is resistant to a temperature up to at least 1000°C and preferably has a mean diameter between 0.1 mm and 5 mm.

6. Apparatus as claimed in one of the preceding claims, **characterised in that** the outer peripheral wall is a conventional hazardous goods container.

7. A storage and transport method for used, damaged or defective galvanic cells, particularly lithium ion-based cells, **characterised in that** the galvanic cells are embedded directly and individually in a hollow glass granulate serving as a flame retardant for storage/transport for preventing safety critical conditions in an apparatus as claimed in one of the preceding claims.

8. A method as claimed in Claim 7, **characterised in that** the storage and/or transport is performed in a hazardous goods container of appropriate classification, in which the galvanic cells are embedded at a distance from one another as regards height, breadth and depth.

## Revendications

1. Dispositif de transport de cellules galvaniques usagées, endommagées ou défectueuses permettant d'empêcher et de combattre des états critiques en termes de sécurité des cellules galvaniques, notamment des cellules à base d'ions lithium et/ou des cellules de polymère à ions lithium, ledit dispositif comprenant un récipient qui définit un espace, l'espace étant rempli d'un agent ignifuge constitué uniquement d'un granulat de verre creux inerte, non conducteur, non combustible et absorbant se présentant sous la forme d'un produit en vrac, **caractérisé en ce qu'**un panier, laissant passer le matériau ignifuge et destiné à recevoir au moins une cellule galvanique, est disposé dans l'espace et **en ce que** le granulat de verre creux absorbant a un diamètre moyen compris entre 0,1 mm et 10 mm, le panier étant un panier grillagé et le panier étant muni d'éléments d'espacement.

2. Dispositif selon la revendication 1, **caractérisé en ce que** le panier est constitué d'un fil recouvert de poudre.

3. Dispositif selon la revendication 2, **caractérisé en ce que** les éléments d'espacement sont formés par une structure en arceau.

4. Dispositif selon la revendication 3, **caractérisé en ce que** les éléments d'espacement sont disposés sur le sol et/ou sur les parois latérales du panier.

5. Dispositif selon l'une des revendications précédentes, **caractérisé en ce que** le granulat de verre creux est un granulat rond, creux ou pourvu de cavités et résistant à des températures d'au moins 1000°C, lequel granulat a de préférence un diamètre moyen compris entre 0,1 mm et 5 mm.

6. Dispositif selon l'une des revendications précédentes, **caractérisé en ce que** la paroi d'enveloppe extérieure est un récipient de produits dangereux courant.

7. Procédé de stockage et de transport destinés à des cellules galvaniques usagées, endommagées ou défectueuses, en particulier des cellules à base d'ions lithium, **caractérisé en ce que** les cellules galvaniques sont incorporées directement et uniquement dans un granulat de verre creux servant d'agent ignifuge pour le stockage/le transport afin d'empêcher des états critiques en termes de sécurité dans un dispositif selon l'une des revendications précédentes.

8. Procédé selon la revendication 7, **caractérisé en ce que** le stockage et/ou le transport sont effectués dans un récipient de produits dangereux de classification correspondante dans lequel les cellules galvaniques sont incorporées à distance les unes des autres en hauteur, largeur et profondeur.
